# EUROPÄISCHE PATENTSCHRIFT

(11) **EP 1 640 058 B1**
(45) Veröffentlichungstag und Bekanntmachung des Hinweises auf die Patenterteilung: **15.10.2008**
(21) Anmeldenummer: 05027071.9
(22) Anmeldetag: 18.08.2003
(51) Int. Cl.: B01F 3/08, B01F 3/10

(54) **Vorrichtung und Verfahren zum Mischen zweier Fluide**
Apparatus and method for mixing two fluids
Appareil et procédé pour mélanger deux fluides

(30) Priorität: 21.08.2002 DE 10239189
(43) Veröffentlichungstag der Anmeldung: 29.03.2006
(62) Teilanmeldung aus: 03018547.4
(73) Patentinhaber: Endress + Hauser Flowtec AG, 4153 Reinach/BL (CH)
(72) Erfinder: Breithaupt, Hartmut, 74523 Schwäbisch-Hall (DE)
(74) Vertreter: Andres, Angelika Maria

(56) Entgegenhaltungen:
- WO-A-01/93997
- DE-C- 10 030 775
- US-A- 4 262 686
- US-A- 4 938 256

## Beschreibung

Die Erfindung betrifft eine Vorrichtung sowie ein Verfahren zum Mischen wenigstens zweier, insb. hinsichtlich ihrer Viskosität voneinander verschiedener, Fluide.

Zur industriellen Herstellung von Fluidgemischen, wie z.B. Getränken oder Suspensionen, bestehend aus zwei oder mehreren fluiden Komponenten werden oftmals ein erstes und ein zweites Fluid aus zwei getrennten diese jeweils voneinander zunächst getrennt führenden ersten bzw. zweiten Fluidleitung in eine die beiden Fluide gemeinsam führende weiterführende Fluidleitung einströmen gelassen.

Das Einstellen des Mischungsverhältnisses eines solchen, durch Mischen eines in einer ersten Fluidleitung gehaltenen ersten Fluids und eines in einer zweiten Fluidleitung gehaltenen zweiten Fluids herzustellenden Fluidgemisches von vorgebbarer Masse oder von vorgebbarem Volumen erfolgt üblicherweise unter Zuhilfenahme einer Verhältnis-Regelung. Ein eine solche Verhältnis-Regelung verwirklichendes Verfahren umfaßt üblicherweise folgende Schritte:
- Einströmenlassen des ersten Fluids in eine mit der ersten Fluidleitung zumindest zeitweise verbundene dritte Fluidleitung gemäß einem vorgebbaren Sollwert für einen Volumen- oder eines Massendurchfluß des ersten Fluids,
- Einströmenlassen des zweiten Fluids in die mit der zweiten Fluidleitung ebenfalls zumindest zeitweise verbundene dritte Fluidleitung,
- Erfassen des Volumen- oder des Massendurchflusses des ersten Fluids und Erzeugen eines den erfaßten Durchfluß des ersten Fluids repräsentierenden ersten Meßsignals,
- Erfassen eines totalisierten Volumen- oder Massendurchflusses vom ersten Fluid und Erzeugen eines den vom ersten Fluid erfaßten totalisierten Durchfluß momentan repräsentierenden ersten Durchfluß-Meßwerts,
- Ermitteln eines momentanen Sollwerts für einen totalisierten Volumen- oder Massendurchfluß vom zweiten Fluid anhand des Sollwerts für einen Volumen- oder eines Massendurchfluß des ersten Fluids und/oder anhand des ersten Durchfluß-Meßwerts.

Untersuchungen haben nunmehr ergeben, daß bei vorgenannter Verhältnis-Regelung in verstärktem Maße Sedimentationseffekte auftreten können, daß also die beiden Fluide sich miteinander nur sehr unzureichend oder gar nicht vermischen. Dies tritt insb. auch dann vermehrt auf, wenn die Fluide hinsichtlich ihrer Viskosität voneinander deutlich verschieden sind.

Zudem kann bei der vorbeschriebenen Verhältnis-Regelung das Problem auftreten, daß bei Änderung der Führungsgröße, hier also der Änderung des Sollwerts für den Durchfluß des ersten Fluids, bei Änderung der Fluideigenschaften, insb. der Viskosität, oder aber auch bei kurzeittigen Schwankungen der Volumen- oder Massendurchflüsse das Mischungsverhältnis nicht ausreichend genau eingeregelt werden kann. Überdies ist eine Auslegung dieser Verhältnis-Regelung als eine adaptive, also sich selbst anpassende Regelung eher unzureichend oder nur mit sehr großem technischen Aufwand realisierbar.

In der DE-C 100 30 775 ist ferner eine im Bereich der Gaserzeugung für Brennstoffzellensystem eingesetzte Vorrichtung zum Mischen von Wasser und Kohlenwasserstoff, die umfaßt:
- eine erste Fluidleitung zum Führen von zeitweise strömendem Wasser sowie eine zweite Fluidleitung zum Führen eines zeitweise strömenden Kohlenwasserstoff, wobei die erste und die zweite Fluidleitung mittels eines Dreiwege-Magnetventil mit einem Wasser und Kohlenwasserstoff miteinander vermischenden Reformer für Brennstoffzellensysteme verbunden sind,
- ein durch das Dreiwege-Magnetventil gebildetes erstes Durchfluß-Stellgerät zum Regeln der Zufuhr des Wassers sowie ein durch das Dreiwege-Magnetventil gebildetes zweites Durchfluß-Stellgerät zum Regeln der Zufuhr des Kohlenwasserstoffs, sowie
- Mittel zum Erzeugen eines getakteten ersten Stellsignals für das erste Durchfluß-Stellgerät und eines getakteten zweiten Stellsignals für das zweite Durchfluß-Stellgerät,
- wobei die Durchfluß-Stellgeräte mittels der Stellsignale so angesteuert sind, daß Wasser und Kohlenwasserstoff alternierend in den Reformer einströmen.

Eine Aufgabe der Erfindung besteht nunmehr darin eine möglichst robuste, insb. auch während des Betriebes leicht adaptierbare, Gemisch-Regelung und/oder -Steuerung anzugeben, mittels der ein qualitativ hochwertiges Fluidgemisch auf recht einfache Weise herstellbar ist.

Zur Lösung der Aufgabe besteht die Erfindung in einer Vorrichtung zum Mischen wenigstens zweier, insb. hinsichtlich ihrer Viskosität voneinander verschiedener, Fluide, wobei die Vorrichtung eine erste Fluidleitung zum Führen eines zeitweise strömenden ersten Fluids sowie eine zweite Fluidleitung zum Führen eines zeitweise strömenden zweiten Fluids umfaßt und wobei die erste und die zweite Fluidleitung an einer Verbindungsstelle mit einer die beiden, insb. miteinander vermischten, Fluide weiterführenden dritten Fluidleitung verbunden sind. Zudem umfaßt die Vorrichtung ein in den Verlauf der ersten Fluidleitung eingesetztes erstes Durchfluß-Stellgerät zum Einstellen eines Volumen- oder eines Massendurchflusses des ersten Fluids sowie ein in den Verlauf der zweiten Fluidleitung eingesetztes zweites Durchtluß-Stellgerät zum Einstellen eines Volumen- oder eines Massendurchflusses des zweiten Fluids sowie Mittel zum Erzeugen eines einen momentanen Einstellwert für das erste Durchfluß-Stellgerät repräsentierenden ersten Stellsignals eines einen momentanen Einstellwert für das zweite Durchfluß-Stellgerät repräsentierenden zweites Stellsignals.

Darüber hinaus besteht die Erfindung in einem Verfahren zum Erzeugen eines durch Mischen eines in einer ersten Fluidleitung gehaltenen ersten Fluids und eines in einer zweiten Fluidleitung gehaltenen zweiten Fluids herzustellenden Fluidgemisches von vorgebbarer Masse und/oder von vorgebbarem Volumen, welches Verfahren die Schritte Einströmenlassen des ersten Fluids in eine mit der ersten Fluidleitung zumindest zeitweise verbundene dritte Fluidleitung und Einströmenlasser, des zweiten Fluids in die mit der zweiten Fluidleitung ebenfalls zumindest zeitweise verbundene dritte Fluidleitung umfaßt.

Gemäß einer ersten Variante der erfindungsgemäßen Vorrichtung sind die Durchfluß-Stellgeräte mittels der Stellsignale so angesteuert sind, daß die beiden Fluide alternierend in die dritte Fluidleitung einströmen, insb. auch so, daß jedes der beiden Fluide zumindest stromaufwärts der dritten Fluidleitung pulsierend strömt.

Gemäß einer zweiten Variante der erfindungsgemäßen Vorrichtung umfaßt diese weiters ein in den Verlauf der ersten Fluidleitung eingesetztes erstes Durchfluß-Meßgerät zum Erfassen eines Volumen- und/oder eines Massendurchnusses des ersten Fluids und zum Erzeugen wenigstens eines den vom ersten Fluid erfaßten Durchfluß repräsentierenden ersten Meßsignals sowie ein in den Verlauf der zweiten Fluidleitung eingesetztes zweites Durchfluß-Meßgerät zum Erfassen eines Volumen- und/oder eines Massendurchfluß des zweiten Fluids und zum Erzeugen wenigstens eines den vom zweiten Fluid erfaßten Durchfluß repräsentierenden zweiten Meßsignals, wobei das erste Meßgerät zumindest zeitweise einen totalisierten Volumen- oder totalisierten Massendurchfluß vom ersten Fluid erfaßt und ein den vom ersten Fluid erfaßten totalisierten Durchfluß momentan repräsentierenden, insb. digitalen, ersten Durchfluß-Meßwert erzeugt sowie einen ersten Durchfluß-Regler, der unter Verwendung des ersten Meßsignals ein einen momentanen Einstellwert für das erste Durchfluß-Stellgerät repräsentierendes erstes Stellsignal erzeugt und einen zweiten Durchfluß-Regler, der unter Verwendung des zweiten Meßsignals ein einen momentanen Einstellwert für das zweite Durchfluß-Steligerät repräsentierendes zweites Stellsignal erzeugt, wobei der erste und der zweite Durchfluß-Regler über wenigstens eine Meßdatenleitung miteinander verbunden sind und wobei der zweite Durchfluß-Regler das zweite Stellsignal für das zweite Durchfluß-Stellgerät auch unter Verwendung des via Meßdatenleitung übertragenen ersten Durchfluß-Meßwerts erzeugt.

Nach einer bevorzugten ersten Ausgestaltung der zweiten Variante der erfindungsgemäßen Vorrichtung erfaßt das zweite Meßgerät zumindest zeitweise einen totalisierten Volumen- oder Massendurchfluß vom zweiten Fluid und erzeugt das zweite Meßgerät einen den vom zweiten Fluid erfaßten totalisierten Durchfluß momentan repräsentierenden, insb. digitalen, zweiten Durchfluß-Meßwert.

Nach einer bevorzugten zweiten Ausgestaltung der zweiten Variante der erfindungsgemäßen Vorrichtung erzeugt der erste Durchfluß-Regler das erste Stellsignal für das erste Durchfluß-Stellgerät auch unter Verwendung des via Meßdatenleitung übertragenen zweiten Durchfluß-Meßwerts.

Nach einer bevorzugten dritten Ausgestaltung der zweiten Variante der erfindungsgemäßen Vorrichtung sind die, insb. auch pulsieren gelassenen, Durchflüsse des ersten und/oder des zweiten Fluids diskontinuierlich ausgebildet.

Nach einer bevorzugten vierten Ausgestaltung der zweiten Variante der erfindungsgemäßen Vorrichtung sind die Durchflüsse des ersten und/oder des zweiten Fluids taktweise von Null verschieden eingestellt.

Nach einer bevorzugten fünften Ausgestaltung der zweiten Variante der erfindungsgemäßen Vorrichtung sind die Durchflüsse des ersten und des zweiten Fluids alternierend von Null verschieden eingestellt.

Nach einer bevorzugten sechsten Ausgestaltung der zweiten Variante der erfindungsgemäßen Vorrichtung empfängt der erster Durchfluß-Regler zumindest zeitweise ein einen momentanen Sollwert für den Durchfluß des ersten Fluids repräsentierendes, insb. digitales, Führungssignal.

Gemäß einer ersten Variante des erfindungsgemäßen Verfahren werden die Schritte Einströmenlassen des ersten bzw. des zweiten Fluids in die dritte Fluidleitung alternierend ausgeführt und dabei mehrfach wiederholt.

Gemäß einer zweiten Variante des erfindungsgemäßen Verfahrens umfaßt dieses weiters die Schritte Erfassen eines Volumen- oder eines Massendurchflusses des ersten Fluids und Erzeugen eines den erfaßten Durchfluß des ersten Fluids repräsentierenden ersten Meßsignals, Erfassen eines totalisierten Volumen- oder Massendurchflusses vom ersten Fluid und Erzeugen eines den vom ersten Fluid erfaßten totalisierten Durchfluß momentan repräsentierenden ersten Durchfluß-Meßwerts, Ermitteln eines momentanen Sollwerts für einen totalisierten Volumen- oder Massendurchfluß vom zweiten Fluid und Einströmenlassen des zweiten Fluids in die mit der zweiten Fluidleitung ebenfalls zumindest zeitweise verbundene dritte Fluidleitung zumindest solange, bis der totalisierte Volumen- oder Massendurchfluß des zweiten Fluids dem ermittelten Sollwert entspricht.

Nach einer bevorzugten ersten Ausgestaltung der zweiten Variante des erfindungsgemäßen Verfahrens umfaßt dieses als weiteren Schritt das Erfassen eines Volumen- oder eines Massendurchflusses des zweiten Fluids und Erzeugen eines den erfaßten Durchfluß des zweiten Fluids repräsentierenden zweiten Meßsignals.

Nach einer bevorzugten zweiten Ausgestaltung der zweiten Variante des erfindungsgemäßen Verfahrens werden die Schritte Einströmenlassen des ersten bzw. des zweiten Fluids in die dritte Fluidleitung alternierend ausgeführt.

Nach einer bevorzugten dritten Ausgestaltung der zweiten Variante des erfindungsgemäßen Verfahrens werden dessen Schritte zum Erreichen einer vorgebbaren Menge für das Fluidgemisch wenigstens einmal, insb. aber mehrfach, wiederholt.

Ein Vorteil der Erfindung besteht darin, daß sich damit qualitativ hochwertige Gemische mit sehr genau eingestelltem Mischungsverhältnis auf relativ einfache Weise herstellen lassen. Überdies kann dabei auch auf bislang verwendet statische oder dynamische Mischer weitgehend verzichtet werden, da mit der Erfindung der Einfluß der rheologischen Eigenschaften, insb. der Viskosität, der zu mischenden Fluide auf die Trägheit des Mischvorgangs verringert worden ist, Vorteilhafte Anwendungen der Erfindungen können sich z.B. in der Nahrungsmittelherstellung sowie der pharmazeutischen oder chemischen Industrie ergeben.

Die Vorrichtung und das Verfahren der Erfindung sowie weitere Vorteile werden nun anhand von Ausführungsbeispielen und den Figuren der Zeichnung näher erläutert:
- Fig. 1: zeigt schematisch eine Ausgestaltung der erfindungsgemäßen Vorrichtung,
- Fig. 2 -: zeigt in einem Zeitdiagramm schematisch eine Abfolge von Schritten des erfindungsgemäßen Verfahrens und
- Fig. 3: zeigt schematisch eine weitere Ausgestaltung der erfindungsgemäßen Vorrichtung,

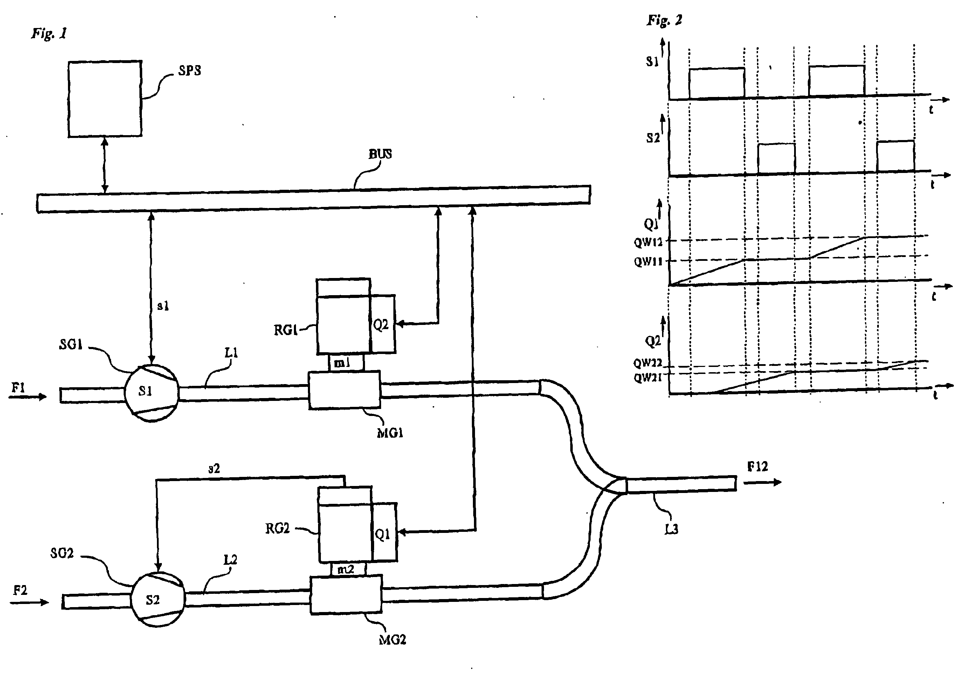

In der Fig. 1 ist ein Ausführungsbeispiel für eine erfindungsgemäße Vorrichtung schematisch dargestellt, die dazu dient ein Fluidgemisch F12, bestehend wenigstens einem ersten Fluid F1 und einem zweiten Fluid F2 in einem vorgebbbarem Mischungsverhältnis F1:F2 herzustellen. Das vorgebene Mischungsverhältnis kann hierbei z.B. in einer mit der Vorrichtung via Feldbus BUS kommunizierenden speich-programmierbaren Steuerung SPS abgelegt sein und dort auch ggf. verändert werden.

Die Vorrichtung umfaßt eine erste Fluidleitung L1 zum Führen des ersten Fluids F1 sowie eine zweite Fluidleitung L2 zum Führen des zweiten Fluids F2. An einer Verbindungsstelle sind die beiden Fluidleitung miteinander sowie mit einer weiterführenden dritten Fluidleitung L3 verbunden.

Zum Herstellen des Fluidgemisches F12 wird erfindungsgemäß zunächst das Fluid F1 durch Fluidleitung L1 hindurch in die Fluidleitung L3 einströmen gelassen, wobei ein entsprechend vorgebbarer Volumen- oder Massendurchfluß des Fluids F1 mittels eines in den Verlauf der Fluidleitung L1 eingesetzten erstes Durchfluß-Stellgeräts SG1 eingestellt wird. Nachdem eine vorgebbare Menge des Fluids 1 fließen gelassen worden ist, wird mittels des Durchfluß-Stellgeräts SG1 der Durchfluß des Fluids F1 auf Null gestellt und anschließend das Fluid F2 durch Fluidleitung L2 hindurch in die Fluidleitung L3 einströmen gelassen. Ein entsprechend vorgebbarer Volumen- oder Massendurchfluß des Fluids F2 wird in analoger Weise mittels eines in den Verlauf der Fluidleitung L2 eingesetzten zweiten Durchfluß-Stellgeräts SG2 eingestellt. Als Durchfluß-Stellgeräte SG1, SG2 können hierbei z.B. elektrisch steuerbare Pumpen, vorzugsweise eine Kolben- oder Zahnradpumpen, oder aber auch elektrisch steuerbare Ventiie dienen.

Zum Einstellen des Volumen- oder Massendurchfluß des Fluids F1 ist nach einer Ausgestaltung der Erfindung darüber hinaus ein in den Verlauf der Fluidleitung L1 eingesetztes erstes Durchfluß-Meßgerät MG1 vorgesehen, das dazu dient, den für das Fluid F1 tatsächlich eingestellten Durchfluß zu erfassen und wenigstens ein den vom Fluid F1 erfaßten Durchfluß entsprechend repräsentierenden erstes Meßsignal m1 zu erzeugen. Das Meßsignal m1 wird einem ersten Durchfluß-Regler RG1 zugeführt, der unter Verwendung dieses Meßsignals m1 als auch eines vorgebbaren Sollwerts für den Volumen- oder Massendurchfluß des Fluids F1 ein einen momentanen Einstellwert S1 für das Durchfluß-Stellgerät SG1 repräsentierendes erstes Stellsignal s1 erzeugt, von welchem Einstellwert S1 ein zeitlicher Verlauf in Fig. 2 schematisch dargestellt ist.

Durchfluß-Meßgerät MG1 sowie Durchfluß-Regler RG1 können, wie in Fig. 1 schematisch dargestellt, in vorteilhafter Weise in einem einzigen, ggf. modular aufgebauten Gehäuse untergebracht sein; sie können selbstverständlich aber auch voneinander getrennt und dementsprechend über eine elektrische Verbindung in Kontakt stehend in der Vorrichtung angeordnet sein,

Nach einer Ausgestaltung der Erfindung dient als Durchfluß-Meßgerät MG1 ein Coriolis-Massendurchflußmeßgerät. Nach einer anderen Ausgestaltung der Erfindung wird ein zusätzlich auch eine Fluid-Dichte in der Fluidleitung L1 erfassendes Coriolis-Massendurchfluß-/ Dichtemeßgerät oder ein zusätzlich auch eine Fluid-Viskosität in der Fluidleitung L1 erfassendes Coriolis-Massendurchfluß-/ Dichte-Niskositätsmeßgerät als Durchfluß-Meßgerät MG1 verwendet.

Nach einer weiteren Ausgestaltung der Erfindung ist ferner vorgesehen, daß die aus Durchfluß-Meßgerät MG1 und Durchfluß-Regler RG1 gebildete erste funktionelle Einheit den vom Fluid F1 erfaßten Volumen- oder Massendurchflusses totalisiert, also über ein vorgebbares Zeitintervall integriert, und den vom Fluid F1 erfaßten totalisierten Durchfluß momentan repräsentierenden ersten Durchfluß-Meßwert Q1 erzeugt. Der, z.B. ebenfalls mittels des Durchfluß-Meßgeräts MG1 erzeugte, Durchfluß-Meßwert Q1 wird im Durchfluß-Regler RG1 wiederholt mit einem vorgebenen ersten Sollwert QW11 für den totalisierten Volumen- oder Massendurchfluß verglichen. Ausgehend von diesem Vergleich wird Sollwert für den Volumen- oder Massendurchfluß des Fluids F1 solange von Null verschieden gehalten, bis der Durchfluß-Meßwert Q1 seinen zugehörigen Sollwert QW11 erreicht oder überschritten hat, vgl. Fig. 2.

Gemäß einer weiteren Ausgestaltung der Erfindung wird mittels der Vorrichtung nach dem Erreichen des Sollwerts QW11 ausgehend vom vorgegebenen Mischungsverhältnis F1:F2 und anhand des momentan ermittelten Durchfluß-Meßwerts Q1 ein erster Sollwert QW21 für einen vom Fluid F2 noch zu erfassenden totalisierten Volumen- oder Massendurchfluß gebildet.

Zum Erzeugen eines entsprechenden, den vom Fluid F2 erfaßten totalisierten Durchfluß momentan repräsentierenden zweiten Durchfluß-Meßwerts Q2 und zum Vergleichen deselben mit dem Sollwert QW21 umfaßt die Vorrichtung gemäß einer weiteren Ausgestaltung der Erfindung ein in den Verlauf der Fluidleitung L2 eingesetztes zweites Durchfluß-Meßgerät MG2 sowie einen mit diesem, z.B. direkt oder via Feldbus BUS, gekoppelten zweiten Durchfluß-Regler RG2. Das Durchfluß-Meßgerät MG2 erfaßt den für das Fluid F2 tatsächlich eingestellten Durchfluß und erzeugt wenigstens einen den vom Fluid F2 erfaßten Durchfluß entsprechend repräsentierenden zweites Meßsignal m2.

Nach einer weiteren Ausgestaltung der Erfindung wird auch als Durchfluß-Meßgerät MG2 ein ein zusätzlich auch eine Fluid-Dichte in der angeschlossenen Fluidleitung L2 erfassendes Coriolis-Massendurchfluß-/Dichtemeßgerät oder ein zusätzlich auch eine Fluid-Viskosität in der angeschlossenen Fluidleitung L2 erfassendes Coriolis-Massendurchfluß-/Dichte-/Viskositätsmeßgerät verwendet. Gemäß einer weiteren Ausgestaltung der Erfindung ist das Durchfluß-Meßgerät MG2 typlgleich zum Durchfluß-Meßgerät MG1.

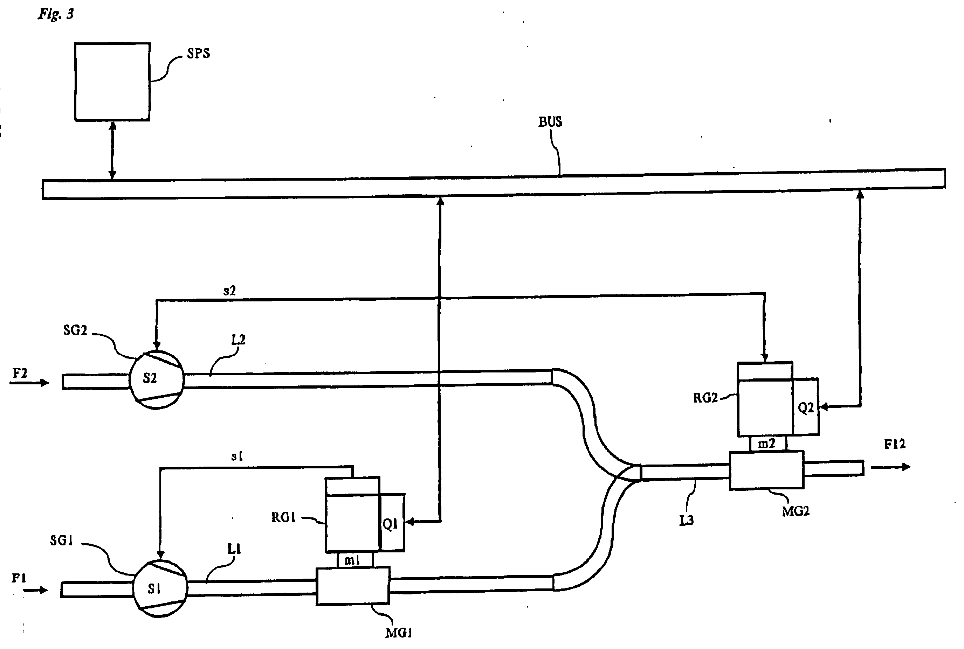

Nach einer anderen Ausgestaltung der Erfindung ist das Durchfluß-Meßgerät MG2, wie in Fig. 3 schematisch dargestellt, in den Verlauf der Fluidleitung L3 eingesetzt, um einen für das Fluidgemisch F12 eingestellten oder sich tatsächlich ergebenden Durchfluß zu erfassen und wenigstens ein diesem erfaßten Durchfluß entsprechend repräsentierenden Meßsignal m2' zu erzeugen. Insbesondere bei dieser Ausgestaltung ist die Verwendung eines Coriolis-Massendurchfluß-/Dichte-/Viskositätsmeßgerät als Durchfluß-Meßgerät MG2 von besonderem Vorteil, da damit u.a. auch die Qualität des Fluidgemisches F12 direkt, insb. auch unmittelbar nach der Herstellung des Fluidgemissches, erfaßt und überwacht werden kann.

Zum gegenseitigen Austausch von Meßdaten, insb. aber zum Empfangen des Sollwerts QW21, ist die aus Durchfluß-Meßgerät MG2 und Durchfluß-Regler RG2 gebildete zweite funktionelle Einheit mit der aus Durchfluß-Meßgerät MG1 und Durchfluß-Regler RG1 gebildeten ersten funktionelle Einheit Ober eine vorzugsweise mittels des Feldbusses BUS realisierte Meßdatenleitung miteinander gekoppelt; die Meßdatenleitung kann aber z.B. auch eine die beiden Durchfluß-Reglem RG1, RG2 direkt verbindende Datenleitung sein.

Anhand des Meßsignals m2 sowie eines vorgebbaren Sollwerts für den Volumen- oder Massendurchfluß des Fluids F2 ermittelt der Durchfluß-Regler RG2 einen momentanen Einstellwert S2 für das Durchfluß-Stellgerät SG2 und sendet diesen mit Hilfe eines zweiten Stellsignals s2 an das Durchfluß-Stellgerät SG2. Darüber hinaus totalisiert die zweite funktionelle Einheit, vorzugsweise das Durchfluß-Meßgerät MG2, den vom Fluid F1 erfaßten Volumen- oder Massendurchfluß und aktualisiert somit den Durchfluß-Meßwert Q2.

Erfindungsgemäß sind die beiden, beispielsweise als Recheck-Signale ausgebildeten, Stellsignale s1, s2, wie auch in Fig. 2 gezeigt, so ausgebildet und so getaktet, daß die Durchfluß-Stellgeräte SG1, SG2 alternierend angesteuert sind, so daß die beiden Fluide F1, F2 in entsprechender Weise alternierend in die dritte Fluidleitung L3 einströmen. Dies führt umgekehrt dazu, daß jedes der beiden Fluide F1, F2 zumindest stromaufwärts der dritten Fluidleitung L3 im wesentlichen diskontinuierlich, insb. pulsierend, strömt.

Nach einer weiteren Ausgestaltung der Erfindung ist femer vorgesehen, daß der Durchfluß-Regler RG2 auch den Sollwert QW21 ermittelt; der Sollwert QW21 kann aber z.B. auch vom Durchfluß-Regler RG1 oder aber auch von der eingangs erwähnten Steuerung SPS bestimmt und an den Durchfluß-Regler RG2 übermittelt werden.

Nachdem der Durchfluß-Moßwert Q2 seinen zugehörigen Sollwert QW21 zumindest erreicht hat, veranlaßt der Durchfluß-Regler RG2 wiederum, daß der Durchfluß des Fluids F2 möglichst zeitnah auf Null gestellt wird, vgl. Fig. 2.

Nunmehr wird mittels der Vorrichtung, z.B. mittels der zweiten funktionellen Einheit, nach dem Erreichen des Sollwerts QW21, ggf, unter Verwendung des momentanen Durchfluß-Meßwerts Q1, und des Sollwerts QW11 ein zweiter Sollwert QW12 für den Durchfluß-Meßwert Q1 gebildet und an den Durchfluß-Regler RG1 übermittelt. Vorzugsweise ist der Sollwert QW12 aber gleich dem Sollwert QW11 eingestellt.

Sowohl dieser Sollwert QW12 als auch der Sollwert QW11 können aber z.B. auch innerhalb des Durchfluß-Regler RG1 als auch mittels der Steuerung SPS berechnet werden. Für den Fall, daß die Sollwerte QW11, QW12 vom Durchfluß-Regler RG2 oder von der Steuerung SPS ermittelt werden, empfängt der Durchfluß-Regler RG1 zumindest zeitweise ein, bevorzugt digitales, Führungssignal, das den vom Durchfluß-Regler RG2 bzw. der Steuerung SPS gesendeten, momentanen Sollwert QW11 bzw. QW12 überträgt.

Die vorbeschrieben Verfahrensschritte werden nunmehr solange wiederholt, bis das Fluidgemisch F12 in einer vorgebbaren Menge, also mit vorgegebener Masse oder mit vorgegebenem Volumen, hergestellt und/oder das Mischungsverhältnis mit der vorgegebenen Genauigkeit eingestellt worden ist. Demzufolge ist noch ein zweiter Sollwert QW22 für den Durchfluß-Meßwert Q2 zu ermitteln und mittels der zweiten funktionellen Einheit nochmals ein entsprechender totalisierter Massen- oder Volumendurchfluß einzustellen: der Sollwert QW22 kann dabei ebenfalls zum zuvor ermittelten Sollwert QW21 gleich sein.

Das wiederholte Anwenden der vorbeschriebenen Verfahrensschritte führt dazu, daß die die Durchflüsse der beiden zweiten Fluide F1, F2 lediglich taktweise von Null verschieden eingestellt und somit die Fluid F1, F2 jeweils nur diskontinuierlich, insb. pulsierend, fließen gelassen werden. Zu dem sind die Durchflüsse der Fluide vorzugsweise lediglich alternierend von Null verschieden eingestellt.

Ein Vorteil des Verfahrens besteht u.a. auch darin, daß das Mischungsverhältnis F1:F2 im wesentlichen durch ein Verhältnis der Pulsweiten der beiden Stellsignale s1, s2 eingestellt werden kann. Zudem kann aber auch eine Qualität des Fluidgemisches, beispielsweise ein gewünschter hoher Homogenitätsgrad des Fluidgemisches F12, in einfacher Weise durch Auswahl einer entsprechend hohen Taktfrequenz für die beiden Stellsignale s1, s2 gezielt beeinflußt werden. Darüberhinaus ist das erfindungsgemäße Verfahren vergleichsweise robust, so daß das Fluidgemisches auch mit gleichbleibend hoher Qualität hergestellt werden kann. Dementsprechend mag es für manche Anwendungen genügen, die Stellsignale s1, s2 zumindest für eine vorgebbare Dauer lediglich zeitgetaktet. insb. auch ohne ständige Überwachung der Fluidströmungen in den einzelnen Fluidleitungen L1, L2 oder L3, zu erzeugen.

## Patentansprüche

1. Vorrichtung zum Mischen wenigstens zweier, insb. hinsichtlich ihrer Viskosität voneinander verschiedener, Fluide, weiche Vorrichtung umfaßt:
- eine erste Fluidleitung (L1) zum Führen eines zeitweise strömenden ersten Fluids (F1) sowie eine zweite Fluidleitung (L2) zum Führen eines zeitweise strömenden zweiten Fluids (F2), wobei die erste und die zweite Fluidleitung (L1, L2) an einer Verbindungsstelle mit einer die beiden miteinander vermischten Fluide (F1, F2) weiterführenden dritten Fluidleitung (L3) verbunden sind,
- ein in den Verlauf der ersten Fluidleitung (L1) eingesetztes erstes Durchfluß-Stellgerät (SG1) zum Einstellen eines Volumen- oder eines Massendurchflusses des ersten Fluids (F1) sowie ein in den Verlauf der zweiten Fluidleitung (L2) eingesetztes zweites Durchfluß-Stellgerät (SG2) zum Einstellen eines Volumen- oder eines Massendurchflusses des zweiten Fluids (F2), sowie
- Mittel zum Erzeugen eines einen momentanen Einstellwert (S1) für das erste Durchfluß-Stellgerät (DG1) repräsentierenden ersten Stellsignals (s1) und eines einen momentanen Einstellwert (S2) für das zweite Durchfluß-Stellgerät (SG2) repräsentierenden zweites Stellsignals (s2),
- wobei die Durchfluß-Stellgeräte (SG1, SG2) mittels der Stellsignale (s1, s2) so angesteuert sind, daß die beiden Fluide (F1, F2) alternierend in die dritte Fluidleitung (L3) einströmen.

2. Vorrichtung nach Anspruch 1, wobei die Durchfluß-Stellgeräte (SG1, SG2) mittels der Stellsignale (s1, s2) so angesteuert sind, daß jedes der beiden Fluide (F1, F2) zumindest stromaufwärts der dritten Fluidleitung (L3) pulsierend strömt.

3. Vorrichtung nach einem der vorherigen Ansprüche, wobei die Durchflüsse des ersten und/oder des zweiten Fluids (F1, F2) diskontinuierlich sind, insb. auch pulsieren gelassen werden.

4. Vorrichtung nach einem der vorherigen Ansprüche, wobei die Durchflüsse des ersten und/oder des zweiten Fluids (F1, F2) taktweise von Null verschieden eingestellt sind.

5. Vorrichtung nach einem der vorherigen Ansprüche, wobei die Durchflüsse des ersten und des zweiten Fluids (F1, F2) alternierend von Null verschieden eingestellt sind.

6. Vorrichtung nach einem der vorherigen Ansprüche, weiters umfassend ein in den Verlauf der ersten Fluidleitung (L1) eingesetztes erstes Durchfluß-Meßgerät (MG1) zum Erfassen eines Volumen- und/oder eines Massendurchflusses des ersten Fluids (F1) und zum Erzeugen wenigstens eines den vom ersten Fluid (F1) erfaßten Durchfluß repräsentierenden ersten Meßsignals (m1).

7. Vorrichtung nach dem vorherigen Anspruch, weiters umfassend einen ersten Durchfluß-Regler (RG1), der unter Verwendung des ersten Meßsignals (m1) ein den momentanen Einstellwert (S1) für das erste Durchfluß-Stellgerät (DG1) repräsentierendes erstes Stellsignal (s1) erzeugt.

8. Vorrichtung nach dem vorherigen Anspruch, wobei der erste Durchfluß-Regler (RG1) zumindest ein einen momentanen Sollwert (QW11, QW12) für den Durchfluß des ersten Fluids (F1) repräsentierendes, insb. digitales, Führungssignal empfängt.

9. Vorrichtung nach einem der vorherigen Ansprüche 6 bis 8, weiters umfassend ein in den Verlauf der zweiten Fluidleitung (L2) oder in den Verlauf der dritten Fluidleitung (L3) eingesetztes zweites burchfluß-Meßgerät (MG2) zum Erfassen eines Volumen- und/oder eines Massendurchfluß des zweiten Fluids (F2) bzw. des Fluidgemisches (F12) und zum Erzeugen wenigstens eines den vom zweiten Fluid (F2) bzw. vom Fluidgemisch (F12) erfaßten Durchfluß repräsentierenden zweiten Meßsignals (m2).

10. Verfahren zum Erzeugen eines durch Mischen eines in einer ersten Fluidleitung (L1) gehaltenen ersten Fluids (F1) und eines in einer zweiten Fluidleitung (L2) gehaltenen zweiten Fluids (F2) herzustellenden Fluidgemisches (F12) von vorgebbarer Masse und/oder von vorgebbarem Volumen, welches Verfahren folgende Schritte umfaßt:
- Einströmenlassen des ersten Fluids (F1) in eine mit der ersten Fluidleitung (L1) zumindest zeitweise verbundene dritte Fluidleitung (L3) und
- Einströmenlassen des zweiten Fluids (F2) in die mit der zweiten Fluidleitung (L2) ebenfalls zumindest zeitweise verbundene dritte Fluidleitung (L3),
- wobei die Schritte Einströmenlassen des ersten bzw. des zweiten Fluids (F1, F2) in die dritte Fluidleitung (L3) alternierend ausgeführt und dabei mehrfach wiederholt werden, und
wobei das Verfahren weiters wenigstens einen der folgenden Schritte umfaßt:
- Erfassen eines Volumen- oder eines Massendurchflusses in wenigstens einer der drei Fluidleitungen (L1, L2, L3), und/oder
- Erfassen einer Fluid-Dichte in wenigstens einer der drei Fluidleitungen (L1, L2, L3), und/oder
- Erfassen einer Fluid-Viskosität in wenigstens einer der drei Fluidleitungen (L1, L2, L3).

## Claims

1. Apparatures for mixing at least two fluids, which differ particularly with regard to their viscosity, where the Apparatures comprises:
- a first fluid pipe (L1) to transport an intermittently flowing first fluid (F1), and a second fluid pipe (L2) to transport an intermittently flowing second fluid (F2) where the first and second fluid pipe (L1, L2) are connected at a connection point to a third fluid pipe (L3) which transports the two fluids (F1, F2) that are mixed together.
- a first flow adjuster (SG1), inserted in the first fluid pipe (L1), to adjust the volume flow or mass flow of the first fluid (F1), and a second flow adjuster (SG2), inserted in the second fluid pipe (L2), to adjust the volume flow or mass flow of the second fluid (F2).
- means for generating a first control signal (s1) representing an instantaneous setting value (S1) for the first flow adjuster (DG1) and a second control signal (s2) representing an instantaneous setting value (S2) for the second flow adjuster (SG2).
- where the flow adjusters (SG1, SG2) are controlled in such a way by the control signals (s1, s2) that the two fluids (F1, F2) flow alternately into the third fluid pipe (L3).

2. Apparatures as per Claim 1 where the flow adjusters (SG1, SG2) are controlled by the control signals (s1, s2) in such a way that each of the two fluids (F1, F2) flows in a pulsating manner at least upstream of the third fluid pipe (L3).

3. Apparatures as per one of the previous Claims where the flows of the first and/or the second fluid (F1, F2) are discontinuous, flowing particularly in a pulsating manner.

4. Apparatures as per one of the previous Claims where the flows of the first and/or the second fluid (F1, F2) are set to a value other than zero in timed sequence.

5. Apparatures as per one of the previous Claims where the flows of the first and second fluid (F1, F2) are alternately set to a value other than zero.

6. Apparatures as per one of the previous Claims that further comprises an initial flow measuring device (MG1) used in the course of the first fluid pipe (L1) for measuring the volume flow and/or the mass flow of the first fluid (F1) and for generating at least one first measuring signal (m1) that represents the flow recorded for the first fluid (F1).

7. Apparatures as per the previous Claim which also comprises a first flow controller (RG1) which uses the first measuring signal (m1) to generate a first control signal (s1) that represents the instantaneous setting value (S1) for the first flow adjuster (DG1).

8. Apparatures as per the previous Claim where the first flow controller (RG1) receives at least one reference signal representing an instantaneous set value (QW11, QW12) for the flow of the first fluid (F1), particularly a digital reference signal.

9. Apparatures as per one of the previous Claims 6 to 8 that further comprises a second flow measuring device (MG2), used in the course of the second fluid pipe (L2) or in the course of the third fluid pipe (L3) for measuring a volume flow and/or a mass flow of the second fluid (F2) or the fluid mixture (F12) and for generating at least a second measuring signal (m2) representing the flow recorded for the second fluid (F2) or the fluid mixture (F12).

10. Method for generating a fluid mixture (F12) - created by mixing a first fluid (F1) transported in the first fluid pipe (L1) and a second fluid (F2) transported in the second fluid pipe (L2) - of a predeterminable mass and/or a predeterminable volume, where the process involves the following steps:
- letting the first fluid (F1) flow into a third fluid pipe (L3) connected at least intermittently to the first fluid pipe (L1)
- letting the second fluid (F2) flow into the third fluid pipe (L3) which is also connected at least intermittently to the second fluid pipe (L2)
- where the steps for leaving the first or second fluid (F1, F2) flow into the third fluid pipe (L3) are performed alternately and repeated several times and
- where the process also comprises at least one of the following steps:
- recording a volume flow or a mass flow in at least one of the three fluid pipes (L1, L2, L3) and/or
- recording a fluid density in at least one of the three fluid pipes (L1, L2, L3) and/or
- recording a fluid viscosity in at least one of the three fluid pipes (L1, L2, L3).

## Revendications

1. Appareils destiné au mélange d'au moins deux fluides différents, notamment d'un point de vue de leur viscosité, lequel Appareils comprend :
- une première conduite de fluide (L1) destinée à acheminer un premier fluide (F1) s'écoulant par intermittence, ainsi qu'une deuxième conduite de fluide (F2) destinée à acheminer un deuxième fluide (F2) s'écoulant par intermittence, la première et la deuxième conduite de fluide (L1, L2) étant reliées au niveau d'un point de liaison avec une troisième conduite de fluide (L3) acheminant les deux fluides (F1, F2) mélangés entre eux,
- un premier organe de réglage de débit (SG1) inséré dans le tronçon de la première conduite de fluide (L1), destiné au réglage d'un débit volumique ou d'un débit massique du premier fluide (F1), ainsi qu'un deuxième organe de réglage de débit (SG2) inséré dans le tronçon de la deuxième conduite de fluide (L2), destiné au réglage d'un débit volumique ou d'un débit massique du deuxième fluide (F2), ainsi que
- des moyens destinés à générer un premier signal de réglage (s1) représentant une valeur de réglage momentanée (S1) pour le premier organe de réglage de débit (SG1) et un deuxième signal de réglage (s2) représentant une valeur de réglage momentanée (S2) pour le deuxième organe de réglage de débit (SG2),
- les organes de réglage de débit (SG1, SG2) étant commandés au moyen des signaux de réglage (s1, s2) de telle manière que les deux fluides (F1, F2) circulent alternativement dans la troisième conduite de fluide (L3).

2. Appareils selon la revendication 1, pour lequel les organes de réglage de débit (SG1, SG2) sont commandés au moyen des signaux de réglage (s1, s2) de telle sorte que chacun des deux fluides (F1, F2) circule de façon pulsée au minimum en amont de la troisième conduite de fluide (L3).

3. Appareils selon l'une des revendications précédentes, pour lequel les débits du premier et / ou du deuxième fluide (F1, F2) sont discontinus, notamment également pulsés.

4. Appareils selon l'une des revendications précédentes, pour lequel les débits du premier et / ou du deuxième fluide (F1, F2) sont réglés cycliquement à une valeur différente de zéro.

5. Appareils selon l'une des revendications précédentes, pour lequel les débits du premier et / ou du deuxième fluide (F1, F2) sont réglés alternativement à une valeur différente de zéro.

6. Appareils selon l'une des revendications précédentes, comprenant par ailleurs un premier débitmètre (MG1) inséré dans le tronçon de la première conduite de fluide (L1), destiné à mesurer un débit volumique et / ou massique du premier fluide (F1) et à générer au moins un premier signal de mesure (m1) représentant le débit mesuré du premier fluide (F1).

7. Appareils selon la revendication précédente, comprenant par ailleurs un premier régulateur de débit (RG1) qui, au moyen du premier signal de mesure (m1), génère un premier signal de mesure (s1) représentant la valeur de réglage momentanée (S1) pour le premier organe de réglage de débit (SG1).

8. Appareils selon la revendication précédente, pour lequel le premier régulateur de débit (RG1) reçoit au minimum un signal de commande, notamment numérique, représentant une valeur de consigne momentanée (QW11, QW12) pour le débit du premier fluide (F1).

9. Appareils selon l'une des revendications précédentes 6 à 8, comprenant par ailleurs un deuxième débitmètre (MG2) inséré dans le tronçon de la deuxième conduite de fluide (L2) ou dans le tronçon de la troisième conduite de fluide (L3), destiné à mesurer un débit volumique et / ou massique du deuxième fluide (F2) ou du mélange de fluide (F12), et à générer au moins un deuxième signal de mesure (m2) représentant le débit mesuré du deuxième fluide (F2) ou du mélange de fluide (F12).

10. Méthode destiné à la génération d'un mélange de fluide (F12) obtenu par le mélange d'un premier fluide (F1) contenu dans une première conduite de fluide (L1) et d'un deuxième fluide (F2) contenu dans une deuxième conduite de fluide (L2) d'une masse prédéfinissable et / ou d'un volume prédéfinissable, lequel procédé comprend les étapes suivantes :
- Entrée en circulation du premier fluide (F1) dans une troisième conduite de fluide (L3) reliée au moins par intermittence avec la première conduite de fluide (L1) et
- Entrée en circulation du deuxième fluide (F2) également dans la troisième conduite de fluide (L3) reliée au moins par intermittence avec la deuxième conduite de fluide (L2),
- Les étapes d'entrée en circulation du premier ou du deuxième fluide (F1, F2) dans la troisième conduite de fluide (L3) étant exécutées alternativement et étant répétées plusieurs fois, et
le procédé comprenant par ailleurs au moins l'une des étapes suivantes :
- Mesure d'un débit volumique ou massique dans au moins l'une des trois conduites de fluide (L1, L2, L3), et / ou
- Mesure d'une densité de fluide dans au moins l'une des trois conduites de fluide (L1, L2, L3), et / ou ,
- Mesure d'une viscosité de fluide dans au moins l'une des trois conduites de fluide (L1, L2, L3).
